# FASCICULE DE BREVET EUROPEEN

(11) **EP 1 035 316 B1**
(45) Date de publication et mention de la délivrance du brevet: **08.12.2004**
(21) Numéro de dépôt: 00400640.9
(22) Date de dépôt: 09.03.2000
(51) Int. Cl.: F02K 1/00, F02K 1/12, F02K 1/15

(54) **Tuyère d'éjection de turboréacteur axisymétrique et à orientation globale**
Axiasymetrische allseitig schwenkbare Schubdüse
Axisymmetric vectoriable jet nozzle

(30) Priorité: 10.03.1999 FR 9902934
(43) Date de publication de la demande: 13.09.2000
(73) Titulaire: Snecma Moteurs, 75015 Paris (FR)
(72) Inventeur: Bouiller, Philippe Pierre Vincent, 77210 Samoreau (FR); Charier, Gilles Alain Marie, 77130 La Grande Paroisse (FR); Jourdain, Gérard Ernest André, 91250 Saintry sur Seine (FR); Kettler, Daniel Germain Alexis, 77590 Chartrettes (FR); Mandet, Gérard Marcel François, 77133 Fericy (FR); Prouteau, Jackie Raymond Julien, 94440 Villecresnes (FR)

(56) Documents cités:
- EP-A- 0 060 763
- EP-A- 0 557 229
- FR-A- 1 025 827
- GB-A- 1 306 588
- US-A- 2 831 319
- US-A- 3 098 352
- US-A- 4 984 741
- US-A- 5 351 888
- US-A- 5 398 499

## Description

L'invention concerne une tuyère d'éjection de turboréacteur, axisymétrique et à orientation globale, du type comportant, en aval d'un conduit d'éjection d'axe X, une couronne extérieure de volets froids et une couronne intérieure de volets chauds, la couronne intérieure de volets chauds comportant deux groupes de volets dans le prolongement les uns des autres et articulés à leur jonction, les volets du groupe de volets amont étant des volets convergents et les volets du groupe de volets aval étant des volets divergents, ladite couronne extérieure de volets et chacun desdits groupes de volets comportant une série de volets commandés et une série de volets suiveurs intercalés.

Les tuyères orientables offrent aux avions de combat une agilité supplémentaire et une meilleure manoeuvrabilité en tangage et en lacet.

En général, la tuyère d'éjection orientable est montée à l'extrémité du conduit d'éjection au moyen d'une rotule dont un élément extérieur peut pivoter sur une sphère fixée au conduit d'éjection grâce à des premiers moyens de commande, et les volets convergents portés par l'élément extérieur sont actionnés à l'unisson par des deuxièmes moyens de commande ancrés sur l'élément extérieur de la rotule pour régler la section d'éjection des gaz.

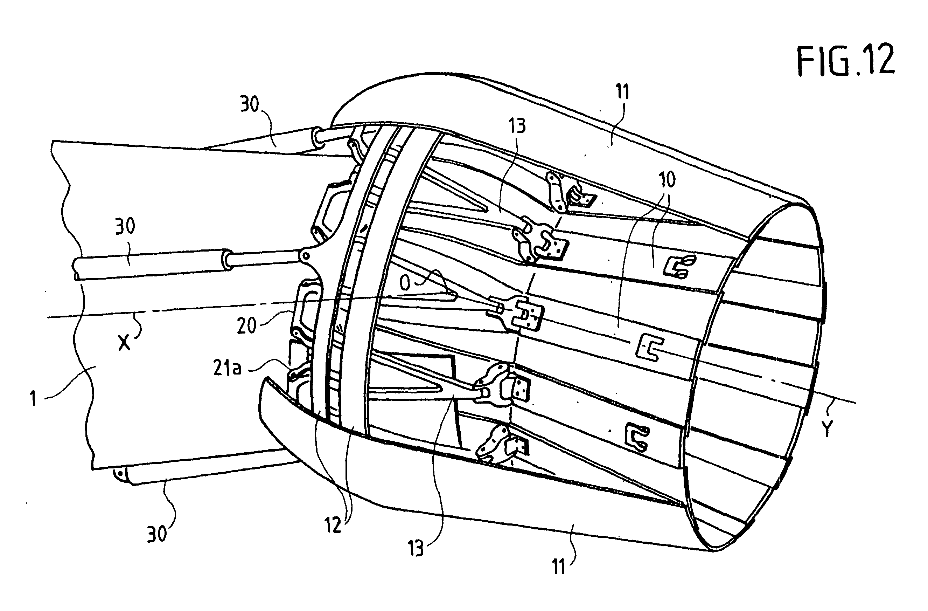

US 4 984 741 montre une telle tuyère dans laquelle les volets convergents ont une section longitudinale arquée et coulissent dans des guides de l'élément extérieur. Lorsque les volets divergents sont articulés sur les volets convergents, ainsi que cela est montré sur la figure 11, il est prévu en outre un anneau de commande 61, actionné par des vérins 62 ancrés sur l'élément extérieur de la rotule et relié aux volets divergents par des tiges 61. Les volets froids sont entraînés par les volets divergents au moyen de biellettes.

US-A-5 351 888 montre en outre une tuyère d'éjection de turboréacteur vectorielle à volets froids extérieurs et à volets chauds intérieurs comportant un groupe de volets convergents et un groupe de volets divergents. Le conduit d'éjection est muni d'une paroi sphérique et la cinématique comporte trois groupes de vérins indépendants.

Partant de cet état de la technique, l'invention s'est donné pour but de proposer une tuyère d'éjection, axisymétrique et à orientation globale, dans laquelle une seule commande réalise la fonction d'orientation de la tuyère et la fonction de réglage de la section de la tuyère en fonction des conditions de vol, permettant ainsi de simplifier la construction et de diminuer la masse.

Selon l'invention la tuyère est caractérisée par le fait que :
- l'extrémité aval du conduit d'éjection comporte une paroi sphérique d'axe X sur laquelle viennent en appui les extrémités amont des volets convergents viennent en appui sur la paroi sphérique du conduit d'éjection.
- un anneau de commande entoure la paroi sphérique et est déplacé parallèlement à l'axe X par des moyens de commande et bascule par rapport à l'axe X grâce aux mêmes moyens de commande,
- les volets froids sont articulés sur l'anneau de commande,
- l'extrémité aval de chaque volet commandé convergent est reliée à l'extrémité aval d'un levier de commande articulé sur l'anneau de commande et dont l'extrémité amont prend appui sur la surface extérieure de la paroi sphérique, et
- les extrémités amont des leviers de commande sont reliées à l'anneau de commande par un dispositif de synchronisation assurant un autocentrage de l'anneau de commande et des deux couronnes de volets par rapport à la paroi sphérique.

Avantageusement, le dispositif de synchronisation comporte, pour chaque paire de leviers de commande adjacents, une pièce articulée sur l'anneau de commande, de manière à pouvoir pivoter autour d'un axe perpendiculaire à l'axe de l'anneau et deux biellettes articulées respectivement, d'une part, sur ladite pièce et, d'autre part, sur l'extrémité amont d'un levier de commande de ladite paire de leviers.

Selon un premier mode de réalisation de l'invention, les extrémités amont des volets convergents coulissent à l'intérieur de la paroi sphérique par l'intermédiaire de deux galets.

L'extrémité aval de chaque levier de commande est articulée sur l'extrémité aval du volet commandé convergent correspondant. L'extrémité amont de chaque levier de commande roule sur la surface externe de la paroi sphérique par l'intermédiaire d'un galet ou d'un patin à billes.

Selon un deuxième mode de réalisation de l'invention, l'extrémité amont de chaque levier de commande est articulée sur l'extrémité amont du volet commandé convergent correspondant.

L'extrémité aval de chaque levier de commande est articulée sur l'extrémité aval du volet commandé convergent correspondant. L'extrémité amont du volet convergent roule sur la surface externe de la paroi sphérique par l'intermédiaire de deux galets ou de patins à billes.

Selon une variante du deuxième mode de réalisation, chaque levier de commande est remplacé par deux biellettes articulées sur l'anneau de commande.

Selon un troisième mode de réalisation de l'invention, l'extrémité amont de chaque levier de commande est articulée sur l'extrémité amont du volet commandé convergent correspondant. L'extrémité amont du volet convergent roule sur la surface extérieure de la paroi sphérique par l'intermédiaire de deux galets ou de patins à billes. L'extrémité aval de chaque levier de commande est reliée au volet commandé convergent correspondant par une première biellette articulée sur un levier, ce dernier étant articulé sur ledit volet et étant en outre relié par une deuxième biellette à un deuxième anneau situé en aval de l'anneau de commande et solidarisé à ce dernier par des tirants, ce deuxième anneau étant destiné à reprendre au moins une partie des efforts de pression exercés par les gaz d'éjection sur la couronne intérieure de volets.

D'autres avantages et caractéristiques de l'invention ressortiront à la lecture de la description suivante faite à titre d'exemple et en référence aux dessins annexés dans lesquels :
la figure 1 est une coupe selon un plan vertical passant par l'axe de la turbomachine de l'arrière corps d'un turboréacteur équipé d'une tuyère axisymétrique à orientation globale selon un premier mode de réalisation de l'invention ;
la figure 2 est une vue en perspective et partiellement écorchée de la tuyère de la figure 1 ;
la figure 3 montre le circuit de ventilation de la tuyère de la figure 1 ;
la figure 4 est une vue latérale de l'extrémité amont d'un levier de commande équipé d'un patin à billes ;
la figure 5 est une vue radiale du patin à billes de la figure 4 ;
les figures 6 et 7 sont équivalentes aux figures 4 et 5, et montrent une variante de patin à billes ;
les figures 8 à 11 montrent respectivement la tuyère de la figure 1 dans la position non orientée fermée, la position non orientée ouverte, la position orientée vers le bas et fermée, et la position orientée vers le haut et ouverte ;
la figure 12 est semblable à la figure 2 et montre, en perspective, la tuyère de la figure 1 dans une position orientée et ouverte ;
la figure 13 est une demi-vue en coupe selon un plan vertical passant par l'axe de la turbomachine d'une tuyère axisymétrique à orientation globale selon un deuxième mode de réalisation de l'invention ;
la figure 14 montre en développé la configuration des vérins de commande de l'anneau de commande ;
la figure 15 montre un vérin à deux chambres qui permet de séparer les fonctions de section de tuyère et d'orientation de tuyère ; et
la figure 16 est une coupe, selon un plan vertical passant par l'axe de la turbomachine, d'une tuyère axisymétrique à orientation globale selon un troisième mode de réalisation de l'invention.

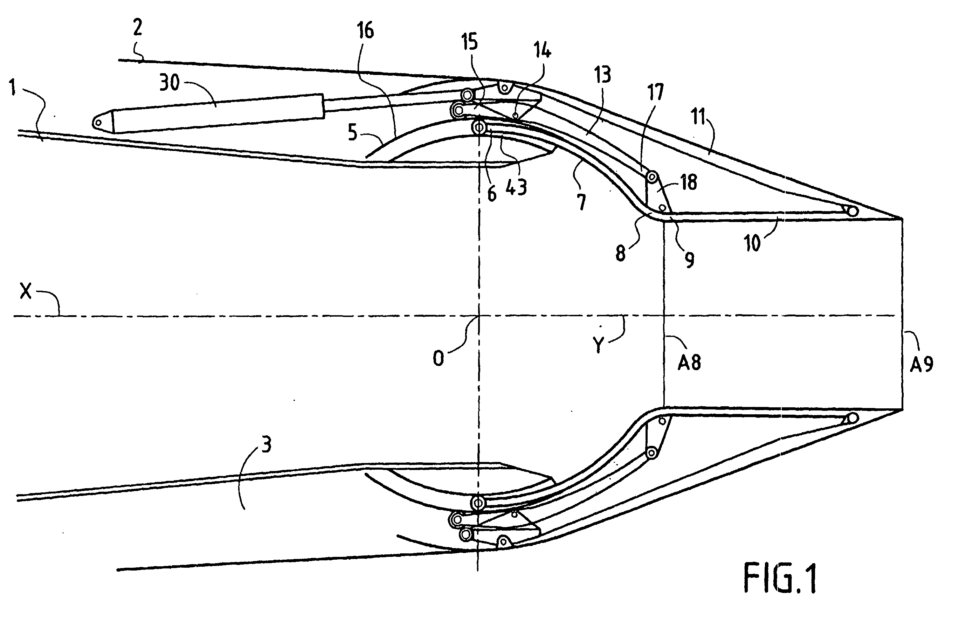

Selon les figures 1, 13 et 18 on a représenté l'arrière-corps d'une turbomachine d'aviation qui comporte en aval de la turbine un conduit d'éjection 1 de gaz, de révolution autour de l'axe X et disposé dans un carter extérieur 2. Le conduit d'éjection 1 et le carter 2 délimitent entre eux un canal annulaire 3 dans lequel circule un air de refroidissement du conduit d'éjection 1. Le conduit d'éjection 1 peut être la paroi externe d'une chambre de postcombustion.

Le conduit d'éjection 1 est équipé, à son extrémité aval, d'une portion de paroi sphérique 5, disposée dans le canal tubulaire 3. Cette portion de paroi sphérique, de centre O, sera appelée indifféremment paroi sphérique, ou sphère, dans la suite du présent mémoire.

Les extrémités amont 6 de volets commandés convergents 7 viennent en appui sur la surface lisse de la sphère 5. Aux extrémités aval 8 des volets commandés convergents 7 sont articulées les extrémités amont 9 de volets commandés divergents 10.

Entre les volets commandés convergents 7 et les volets commandés divergents 10 sont intercalés, de manière en soi connue, des volets suiveurs divergents et des volets suiveurs convergents.

Les volets convergents 7 et les volets divergents 10 forment ainsi deux groupes de volets dans le prolongement les uns des autres et articulés à leur jonction qui constitue une couronne intérieure de volets chauds d'une tuyère convergente divergente.

Cette tuyère convergente divergente est entourée par une couronne de volets froids 11 constituée en alternance par des volets commandés froids et des volets suiveurs. Les volets commandés froids 11 sont articulés en aval sur les volets commandés divergents 10 et en amont sur un anneau de commande 12 qui entoure la sphère 5.

La jonction des volets divergents 10 et des volets froids 11 constitue la section de sortie A9 de la tuyère, tandis que la jonction des volets convergents 7 et des volets divergents 10 constitue la section A8 de la tuyère ou le col de tuyère.

La partie externe des volets froids 11 constitue la continuité du profil avion en aval du carénage recouvrant le carter 2.

Le nombre de volets commandés convergents 7 est égal au nombre de volets commandés divergents 10 et au nombre de volets commandés froids 11.

Les volets commandés convergents 7 sont chacun supportés par l'anneau de commande 12 au moyen d'un levier de commande 13 articulé sur l'anneau de commande 12 au point 14, et dont l'extrémité amont 15 est en appui glissant sur la surface extérieure 16 de la sphère 5.

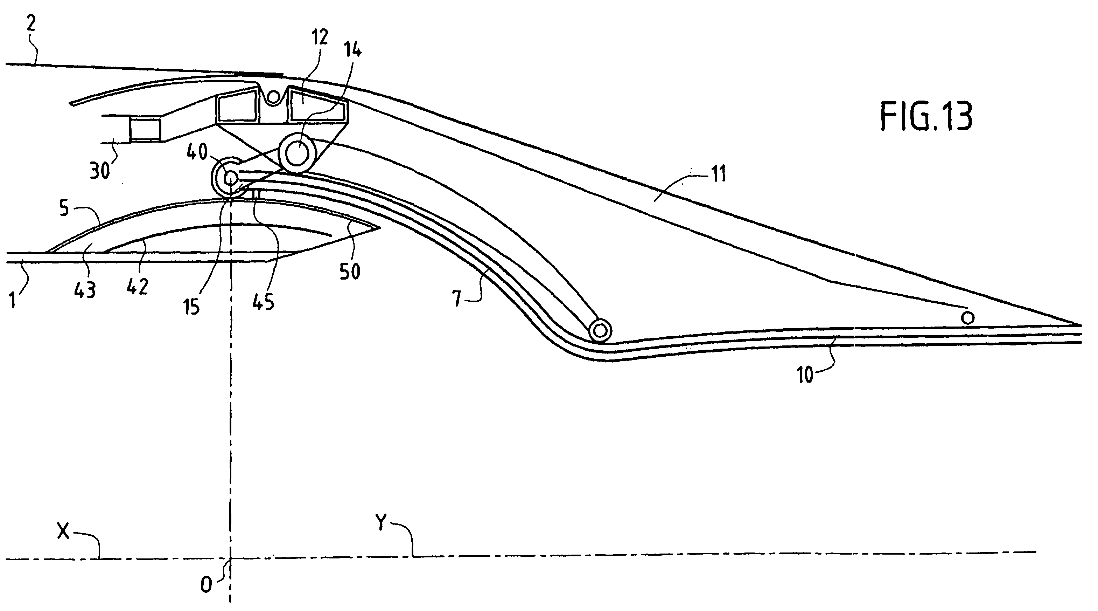

Selon les modes de réalisation montrés sur les figures 1 et 13, l'extrémité aval 17 de chaque levier de commande 13 est articulé sur une chape 18 solidaire de l'extrémité aval 8 du volet commandé convergent 7.

Les extrémités amont 15 des leviers de commande 13 sont en outre reliées à l'anneau de commande 12 par un dispositif de synchronisation qui assure un autocentrage de l'anneau de commande 12 et des couronnes de volets par rapport à la sphère 5.

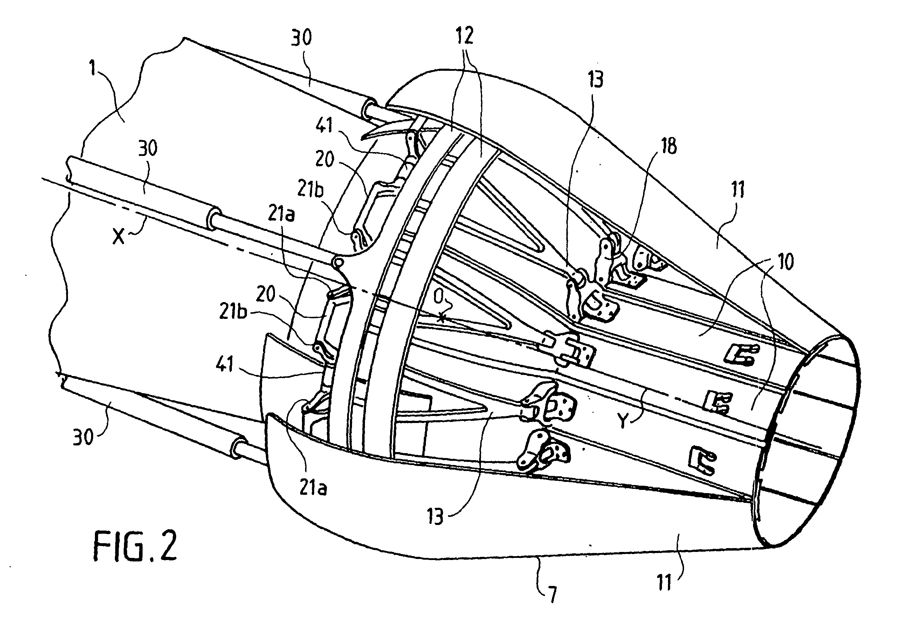

Ainsi que cela est visible sur les figures 2 et 12, le dispositif de synchronisation comporte pour chaque paire de leviers de commande 13 adjacents une pièce 20 articulée sur l'anneau de commande 12, de manière à pouvoir pivoter autour d'un axe tangentiel perpendiculaire à l'axe Y de l'anneau 12, et deux biellettes 21a, 21b articulées respectivement, d'une part, sur la pièce 20 et, d'autre part, sur l'extrémité amont 15 de l'un des leviers de commande 13.

L'anneau de commande 12 est actionné par un ensemble de trois vérins 30 ancrés sur la structure fixe de l'arrière corps et régulièrement répartis dans le canal annulaire 3 autour de l'axe X du conduit d'éjection 1. Un déplacement identique des trois vérins engendre une translation de l'anneau de commande 12 assurant ainsi le pilotage des sections A8 et A9 de la tuyère convergente divergente. Mais un déplacement différentiel des vérins 30 procure un basculement de l'anneau de commande 12 autour du centre O de la sphère 5. L'axe Y de l'anneau de commande 12 coupe l'axe X au centre O de la sphère 5 et peut faire un angle α avec l'axe X qui peut atteindre une valeur voisine de 20°.

Du fait de la présence du dispositif de synchronisation décrit ci-dessus, les sections A8 et A9 sont parfaitement circulaires quelle que soit l'orientation demandée, d'où un comportement des volets 7, 10 et 11 identique à celui d'une tuyère non vectorielle axisymétrique. L'absence de déplacement relatif entre les volets commandés en cas de vectorisation seule permet une parfaite portée des volets suiveurs et garantit une bonne étanchéité de la tuyère.

Selon un premier mode de réalisation montré sur les figures 1 à 12, les extrémités amont 6 des volets convergents 7 sont équipés de deux galets 40 qui roulent sur la surface intérieure de la sphère 5, tandis que les extrémités amont 15 des leviers de commande 13 sont équipées de galets 41 qui roulent sur la surface extérieure 16 de la sphère 5. Une deuxième sphère 42, formant un bouclier de protection thermique est disposée à l'intérieur de la sphère 5.

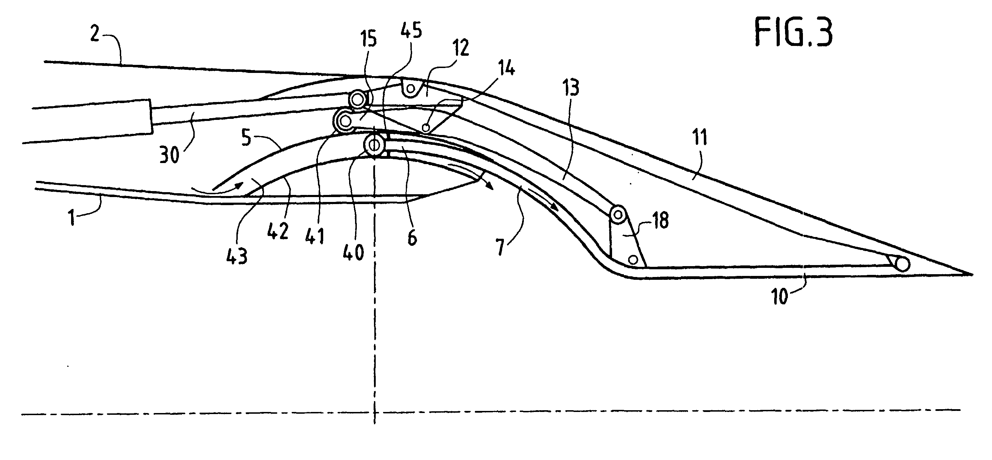

Ainsi que cela est montré sur la figure 3, la sphère 5 comporte des orifices 43 de prélèvement d'air afin de ventiler l'espace séparant les deux sphères 5 et 42. Une partie de cet air prélevé permet de ventiler l'intérieur des volets convergents 7 et divergents 10. Une étanchéité est réalisée par un joint à brosse 45 entre la sphère 5 et les volets convergents 7.

Les forces de pression, exercées par les gaz d'éjection sur la surface interne des volets convergents 7 et divergents 10, tendent à faire basculer les volets convergents 7 vers l'extérieur autour de l'axe des galets 40. La résultante de ces pressions exerce sur les extrémités aval 17 des leviers de commande 13 une force dirigée vers l'extérieur. Pour compenser cette force, la sphère 5 exerce une force dirigée vers l'extérieur sur les galets 41 à l'extrémité amont 15 des leviers 13.

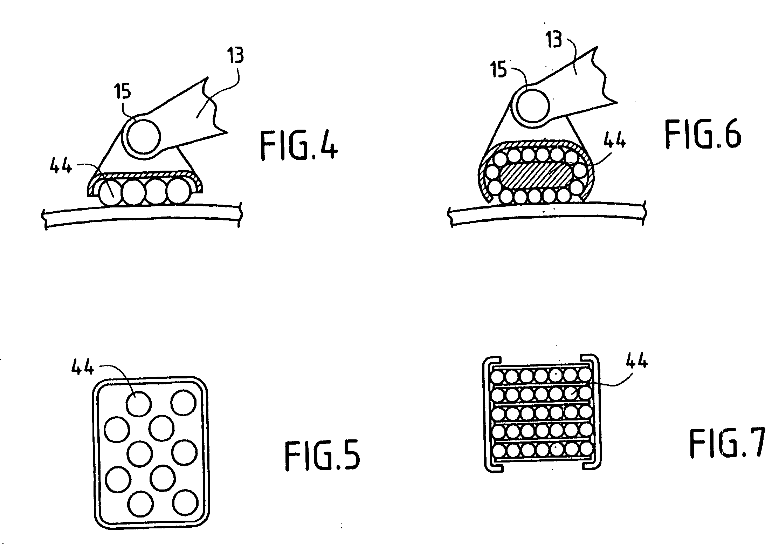

Pour mieux répartir la pression de contact sur les galets 41, et assurer un meilleur glissement des extrémités amont 15 des leviers de commande 13 sur la paroi sphérique 5, les galets 41 peuvent être remplacés par des patins à billes 44, ainsi que cela est montré sur les figures 4 à 7.

Il est à noter que les efforts de pression appliqués sur les volets convergents 7 transitent par l'intermédiaire des leviers de commande 13 dans l'anneau de commande 12 et sur les galets 41 ou les patins à billes 44. La résultante des efforts sur l'anneau de commande 12 aux points 14 étant radiale et les efforts sur les galets 41 ou les patins à billes 44 étant repris par la sphère 5, l'anneau de commande 12 ne reçoit que des efforts axiaux limités à l'articulation des volets froids 11. La poussée demandée aux vérins de commande 30 est donc assez faible.

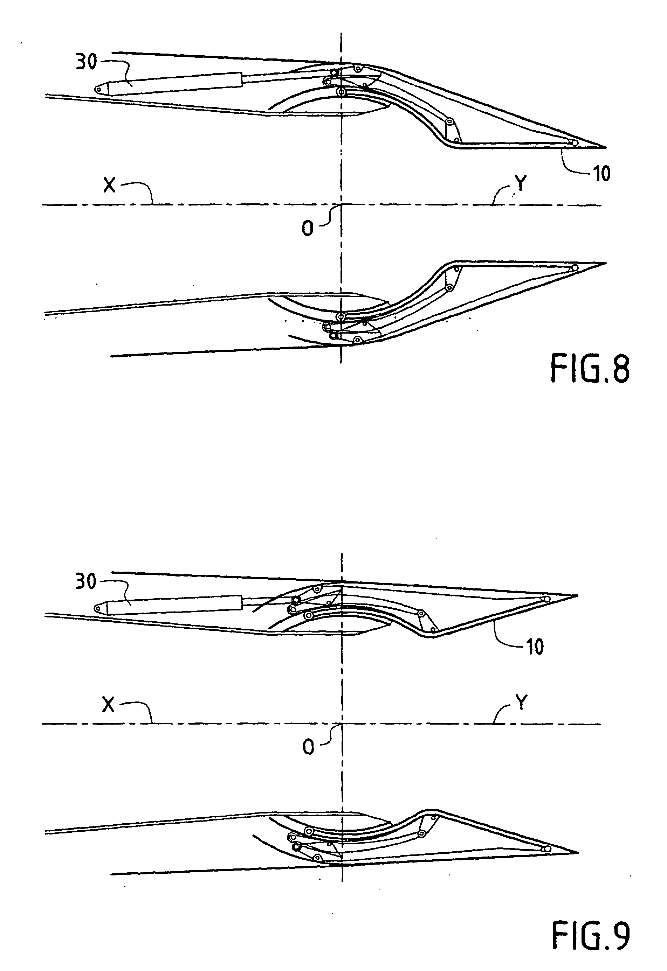

Les figures 8 à 11 montrent différentes positions de la tuyère selon le premier mode de réalisation décrit ci-dessus.

Partant de la position non orientée et fermée de la tuyère montrée sur la figure 8, dans laquelle les trois vérins 30 sont en extension de la même manière, une rétraction identique des trois vérins 30 permet de passer à la position non orientée et ouverte montrée sur la figure 9. Inversement, une extension identique des vérins 30 permet de passer de la position non orientée et ouverte de la figure 9 à la position non orientée et fermée de la figure 8. Durant ces mouvements d'extension et de rétraction identiques des vérins 3, les volets suiveurs coulissent de manière connue par rapport aux volets commandés.

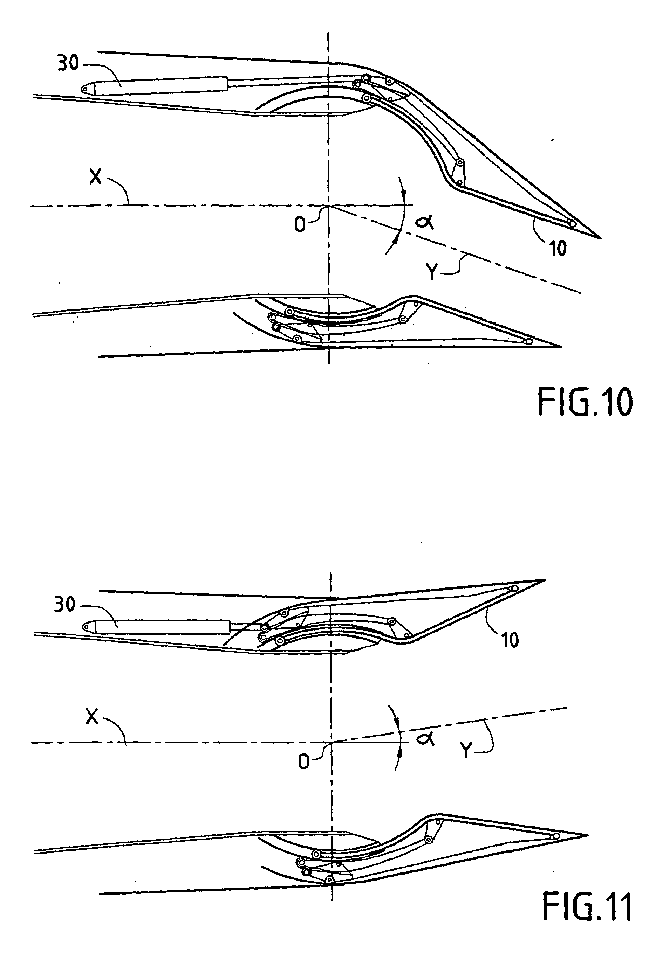

En revanche, un déplacement différentiel des vérins 30 assure un basculement du plan de l'anneau de commande 12 autour du centre O de la sphère, assurant ainsi un pivotement de l'ensemble des volets de la tuyère. On peut ainsi passer de la position non orientée, ouverte ou fermée, vers une position orientée, ouverte ou fermée, montrées sur les figures 10 et 11, sans modifier la position des volets suiveurs par rapport aux volets commandés.

Une fois la tuyère orientée, on peut modifier la section du col A8 en actionnant, de manière identique, les trois vérins 30.

La figure 13 montre un deuxième mode de réalisation de la tuyère selon l'invention.

Ce deuxième mode de réalisation diffère du premier mode de réalisation décrit ci-dessus, essentiellement par le fait que les extrémités amont 6 des volets commandés convergents 7 roulent sur la surface extérieure 16 de la sphère 5 par l'intermédiaire de deux galets 40. L'extrémité amont 15 d'un levier de commande 13 est articulée sur l'extrémité amont 6 du volet commandé convergent correspondant.

Les biellettes 21a et 21b du dispositif de synchronisation sont également articulées sur les extrémités amont 6 des volets commandés convergents 7. Les joints à brosse 45 sont ici placés sous les volets convergents 7.

L'air de ventilation circule sous la sphère 5 pour purger la cavité située entre la sphère 5 et la sphère intérieure 42 et pour ventiler l'intérieur des volets convergents 7 et divergents 10 après passage par des trous 50 ménagés dans la sphère 5.

Les galets 40 peuvent également être remplacés par des patins à billes 44 , tels que ceux montrés sur les figures 4 à 7.

Le fonctionnement de la tuyère selon le deuxième mode de réalisation de l'invention est identique au fonctionnement de la tuyère selon le premier mode de réalisation. Il est à noter que les leviers de commande 13 peuvent être remplacés par deux bielles articulées sur l'anneau de commande 12 et respectivement sur les extrémités amont et aval des volets commandés convergents 7.

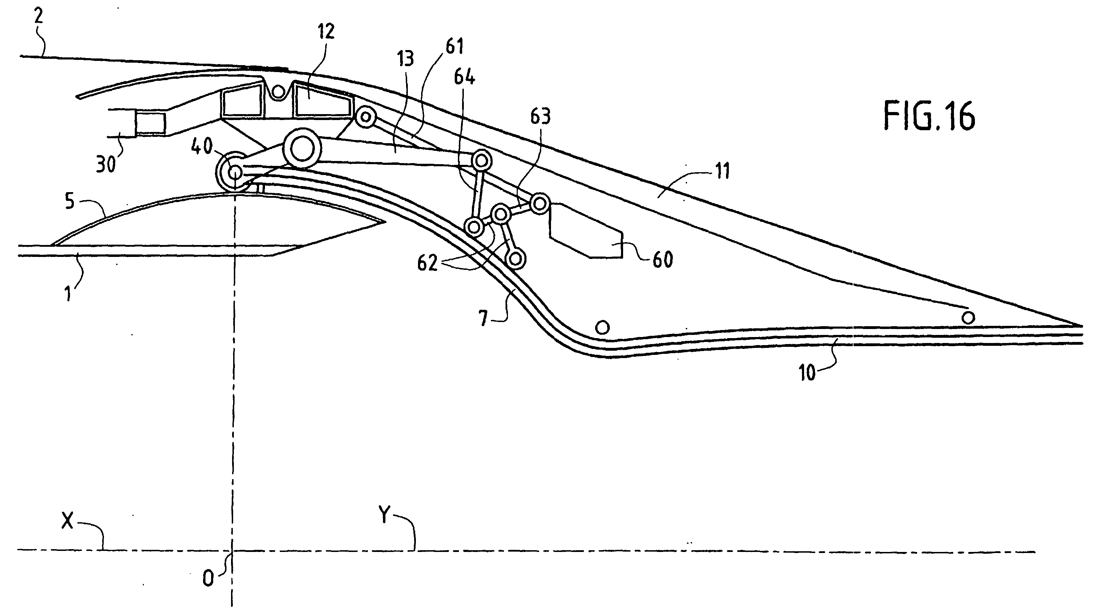

La figure 16 montre un troisième mode de réalisation de l'invention, qui diffère du deuxième mode de réalisation par le fait qu'il est prévu des moyens pour diminuer la force appliquée par les galets 40 sur la face externe 16 de la sphère 5, ces moyens reprenant au moins une partie des efforts exercés par les gaz d'éjection sur les volets convergents 7.

A cet effet, il est prévu un deuxième anneau 60 en aval de l'anneau de commande 12. Ce deuxième anneau 60 est solidarisé à l'anneau de commande par des tirants 61. Un levier 62 en forme de L est articulé par l'une de ses extrémités sur la partie aval de chacun des volets commandés convergents 7. Ce levier 62 est relié, par sa zone médiane, au deuxième anneau 60 au moyen d'une première biellette 63 et est relié, par sa deuxième extrémité à l'extrémité aval 17 du levier de commande correspondant 13 au moyen d'une deuxième biellette 64.

Les efforts de pression appliqués sur les volets convergents 7 transitent par l'intermédiaire du levier 62 sur les biellettes 63 et 64.

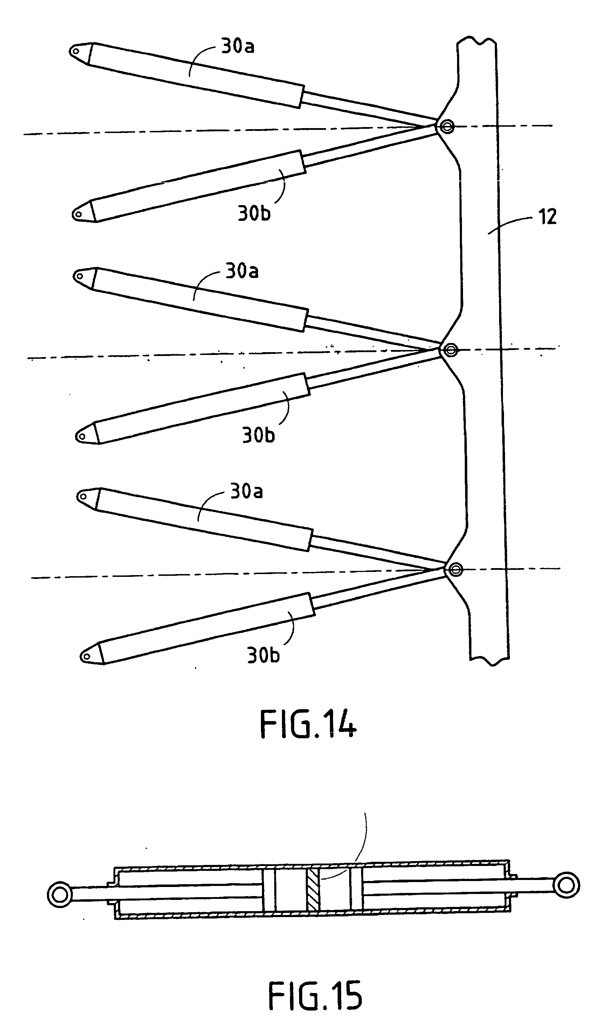

La figure 14 montre une configuration particulière de vérins de commande de l'anneau 12. Chaque vérin 30 est remplacé par un couple de vérins triangulés. Dans chaque couple on distingue un vérin maître 30a et un vérin asservi 30b. On remarque que les vérins maître 30a sont alternés suivant les couples afin d'empêcher la tuyère de tourner sur elle-même autour de l'axe Y.

La figure 15 montre un vérin 30 ayant deux chambres séparées, qui permet de séparer la fonction de pilotage des sections A8 et A9 et la fonction d'orientation de la tuyère.

## Revendications

1. Tuyère d'éjection de turboréacteur, axisymétrique et à orientation globale, du type comportant, en aval d'un conduit d'éjection (1) d'axe X, dont l'extrémité aval supporte une paroi sphérique (5) d'axe X, une couronne extérieure de volets froids (11) et une couronne intérieure de volets chauds, la couronne intérieure de volets chauds comportant deux groupes de volets dans le prolongement les uns des autres et articulés à leur jonction, les volets du groupe de volets amont étant des volets convergents (7) et les volets du groupe de volets aval étant des volets divergent (10), dont l'extrémité aval est articulée à l'extrémité aval correspondante des volets froids (11) ladite couronne extérieure de volets et chacun desdits groupes de volets comportant une série de volets commandés et une série de volets suiveurs intercalés,
**caractérisée par le fait que**
- les extrémités amont (6) des volets convergents (7) viennent en appui sur la paroi splérique (5) du conduit d'éjection
- un anneau de commande (12) entoure la paroi sphérique (5) et est déplacé par des moyens de commande (30) parallèlement à l'axe X et bascule par rapport à l'axe X grâce aux mêmes moyens de commande (30),
- les volets froids (11) sont articulés sur l'anneau de commande (12),
- l'extrémité aval (8) de chaque volet commandé convergent (7) est reliée à l'extrémité aval (17) d'un levier de commande (13) articulé sur l'anneau de commande (12) et dont l'extrémité amont (15) prend appui sur la surface externe (16) de la paroi sphérique (5), et
- les extrémités amont (15) des leviers de commande (13) sont reliées à l'anneau de commande (12) par un dispositif de synchronisation assurant un autocentrage de l'anneau de commande (12) et des deux couronnes de volets par rapport à la paroi sphérique (5).

2. Tuyère d'éjection selon la revendication 1, **caractérisé par le fait que** le dispositif de synchronisation comporte, pour chaque paire de leviers de commande adjacents (13), une pièce (20) articulée sur l'anneau de commande (12), de manière à pouvoir pivoter autour d'un axe perpendiculaire à l'axe (Y) de l'anneau (12) et deux biellettes (21a, 21b) articulées respectivement, d'une part, sur ladite pièce (20) et, d'autre part, sur l'extrémité amont (15) d'un levier de commande (13) de ladite paire de leviers.

3. Tuyère d'éjection selon l'une des revendications 1 ou 2, **caractérisé par le fait que** l'extrémité amont (15) de chaque levier de commande (13) est articulée sur l'extrémité amont (6) du volet commandé convergent (7) correspondant.

4. Tuyère d'éjection selon l'une quelconque des revendications 1 à 3, **caractérisé par le fait que** l'extrémité aval (17) de chaque levier de commande (13) est articulée sur l'extrémité aval (8) du volet commandé convergent (7) correspondant.

5. Tuyère d'éjection selon la revendication 3, **caractérisé par le fait que** l'extrémité aval (17) de chaque levier de commande (13) est reliée au volet commandé convergent (7) correspondant par une première biéllette (64) articulée sur un levier (62), ce dernier étant articulé sur ledit volet (7) et étant, en outre, relié par une deuxième biellette (63) à un deuxième anneau (60) situé en aval de l'anneau de commande (12) et solidarisé à ce dernier par des tirants (61), ce deuxième anneau (60) étant destiné à reprendre au moins une partie des efforts de pression exercés par les gaz d'éjection sur la couronne intérieure de volets.

## Patentansprüche

1. Achsensymmetrische und allseitig drehbare Schubdüse für Turbotriebwerke, die hinter einer Schubleitung mit der Achse X, deren hinteres Ende eine kugelförmige Wand mit der Achse X aufweist, einen äußeren Kranz von Mantelstrom-Klappen (11) und einen inneren Kranz von Primärstrom-Klappen aufweist, wobei der innere Kranz von Primärstrom-Klappen zwei Gruppen von Klappen aufweist, die in Verlängerung zueinander angebracht sind und an ihrer Verbindung angelenkt sind, wobei die Klappen der Gruppe der vorderen Klappen konvergente Klappen sind (7) und die Klappen der Gruppe der hinteren Klappen divergente Klappen (10) sind, , deren hinteres Ende am entsprechenden hinteren Ende der Mantelstrom-Klappen (11) angelenkt ist, wobei dieser äußere Kranz von Klappen und jede der genannten Gruppen von Klappen eine Reihe gesteuerter Klappen und eine Reihe dazwischen angeordneter Folgeklappen aufweisen,
**dadurch gekennzeichnet,**
**dass**
- die vorderen Enden (6) der konvergenten Klappen (7) an der kugelförmigen Wand (5) der Schubleitung in Anlage kommen,
- sich ein Steuerring (12) um die kugelförmige Wand (5) herum erstreckt und durch Steuermittel (30) parallel zur Achse X verschoben wird und vermittels dieser Steuermittel (30) zur Achse X schwenkt,
- die Mantelstrom-Klappen (11) an dem Steuerring (12) angelenkt sind,
- das hintere Ende (8) jeder konvergenten, gesteuerten Klappe (7) mit dem hinteren Ende (17) eines Steuerhebels (13) verbunden ist, der auf dem Steuerring (12) angelenkt ist und dessen vorderes Ende (15) an der Außenfläche (16) der kugelförmigen Wand (5) anliegt, und
- die vorderen Enden (15) der Steuerhebel (13) mit dem Steuerring (12) durch eine Synchronisationsvorrichtung verbunden sind, die eine Selbstzentrierung des Steuerrings (12) und der beiden Klappenkränze gegenüber der kugelförmigen Wand (5) gewährleistet.

2. Schubdüse nach Anspruch 1,
**dadurch gekennzeichnet,**
**dass** die Synchronisationsvorrichtung für jedes Paar von aneinandergrenzenden Steuerhebeln (13) ein Teil (20) aufweist, das auf dem Steuerring (12) dergestalt angelenkt ist, dass es um eine senkrecht zur Achse (Y) des Rings (12) verlaufende Achse schwenken kann, sowie zwei Schwingarme (21a, 21b), die jeweils einerseits an dem genannten Teil (20) und andererseits an dem vorderen Ende (15) eines Steuerhebels (13) dieses Paars von Hebeln angelenkt sind.

3. Schubdüse nach einem der Ansprüche 1 oder 2,
**dadurch gekennzeichnet,**
**dass** das vordere Ende (15) jedes Steuerhebels (13) an dem vorderen Ende (6) der entsprechenden konvergenten, gesteuerten Klappe (7) angelenkt ist.

4. Schubdüse nach einem der Ansprüche 1 bis 3,
**dadurch gekennzeichnet,**
**dass** das hintere Ende (17) jedes Steuerhebels (13) an dem hinteren Ende (8) der entsprechenden konvergenten, gesteuerten Klappe (7) angelenkt ist.

5. Schubdüse nach Anspruch 3,
**dadurch gekennzeichnet,**
**dass** das hintere Ende (17) jedes Steuerhebels (13) mit der entsprechenden konvergenten, gesteuerten Klappe (7) durch einen ersten Schwingarm (64), der an einem Hebel (62) angelenkt ist, verbunden ist, wobei Letzterer an der genannten Klappe (7) angelenkt ist und ferner durch einen zweiten Schwingarm (63) mit einem zweiten Ring (60) verbunden ist, der sich hinter dem Steuerring (12) befindet und mit Letzterem durch Zugstangen (61) fest verbunden ist, wobei dieser zweite Ring (60) dazu vorgesehen ist, zumindest einen Teil der Druckkräfte aufzunehmen, die von den Schubgasen auf den inneren Klappen-Kranz ausgeübt werden.

## Claims

1. Axisymmetric universally swivelling turbojet ejector nozzle of the type comprising, downstream of an ejector duct (1) of axis X, whose downstream end supports a spherical wall (5) of axis X, an outer ring of cold flaps (11) and an inner ring of hot flaps, the inner ring of hot flaps comprising two groups of flaps continuing on one from the other and hinged at their junction, the flaps of the upstream group of flaps being convergent flaps (7) and the flaps of the downstream group of flaps being divergent flaps (10) whose downstream ends are hinged to the corresponding downstream ends of the cold flaps (11), the said outer ring of flaps and each of the said groups of flaps comprising one series of driven flaps and one series of interposed follower flaps,
**characterized in that**
- the upstream ends (6) of the convergent flaps (7) bear on the spherical wall (5) of the ejector duct,
- a control annulus (12) surrounds the spherical wall (5) and is moved parallel to the axis X by drive means (30) and inclined relative to the axis X by the same drive means (30),
- the cold flaps (11) are hinged to the control annulus (12),
- the downstream end (8) of each convergent driven flap (7) is connected to the downstream end (17) of a control lever (13) hinged to the control annulus (12), its upstream end (15) bearing on the outer surface (16) of the spherical wall (5), and
- the upstream ends (15) of the control levers (13) are connected to the control annulus (12) by a synchronization device that automatically centres the control annulus (12) and the two rings cf flaps relative to the spherical wall (5).

2. Ejector nozzle according tc Claim 1, **characterized in that** the synchronization device comprises, for each pair of adjacent control levers (13), a component (20) hinged to the control annulus (12) in such a way that it can pivot about an axis perpendicular to the axis (Y) of the annulus (12) and two links (21a, 21b) each hinged at one point to the said component (20) and at another point to the upstream end (15) of a control lever (13) of the said pair of levers.

3. Ejector nozzle according to either of Claims 1 and 2, **characterized in that** the upstream end (15) of each control lever (13) is hinged to the upstream end (6) of the corresponding convergent driven flap (7).

4. Ejector nozzle according to any one of Claims 1 to 3, **characterized in that** the downstream end (17) of each control lever (13) is hinged to the downstream end (8) of the corresponding convergent driven flap (7).

5. Ejector nozzle according to Claim 3, **characterized in that** the downstream end (17) of each control lever (13) is connected to the corresponding convergent driven flap (7) by a first link (64) hinged to a lever (62), the latter being hinged to the said flap (7) and also being connected by a second link (63) to a second annulus (60) situated downstream of the control annulus (12) and connected to the latter by tie rods (61), this second annulus (60) being intended to absorb at least part of the pressure forces exerted by the ejection gases on the inner ring of flaps.
